# EUROPEAN PATENT APPLICATION

(11) **EP 1 505 781 A1**
(43) Date of publication of application: **09.02.2005**
(21) Application number: 04009857.6
(22) Date of filing: 26.04.2004
(51) Int. Cl.: H04L 12/56, H04Q 11/00

(54) **Multistage electro-optical switch**

(30) Priority: 07.08.2003 US 637241
(71) Applicant: Agilent Technologies, Inc., Palo Alto, CA 94306 (US)
(72) Inventor: Schroeder, Dale W., Scotts Valley, CA 95066 (US)
(74) Representative: Liesegang, Roland, Dr.-Ing.

(57) **Abstract**

A multistage optical switch (200) utilizes different types of switching elements to propagate signals through the switch. Embodiments in accordance with the invention include electrical switching elements (214) in one or more stages and optical switching elements (220) in one or more different stages. An optical-to-electrical converter (212) is connected to each signal line input into an electrical switching element (214) and an electrical-to-optical converter (216) is connected to each signal line output of an electrical switching element (214). Fiber optic cables (218) may be used to transmit signals between stages. A multistage optical switch having any desired number of stages can be constructed in accordance with the invention.

## Description

### Technical Field:

The invention relates generally to optical communications, and more particularly to optical switches and optical switching systems. Still more particularly, the invention relates to a multistage optical switch.

### Background:

Recent and ongoing innovations in fiber optic technology have resulted in the increased use of optical fibers in a number of applications, including optical communications. This increased use has led to a need for efficient peripheral devices that assist in the transmission of data through the optical fibers. One such peripheral device is an optical switch. An optical switch operates to selectively couple one optical fiber to a second optical fiber such that the coupled optical fibers are in communication with each other.

One type of optical switch is a multistage switch, where smaller single stage crosspoint switches are typically interconnected to form the multistage switch. A well-known model for a multistage switch is the Clos architecture, named for Charles Clos of Bell Laboratories. The Clos architecture works well with large switches because the design reduces the number of switches needed to accomplish an N x N switch from N² to (2N-1).

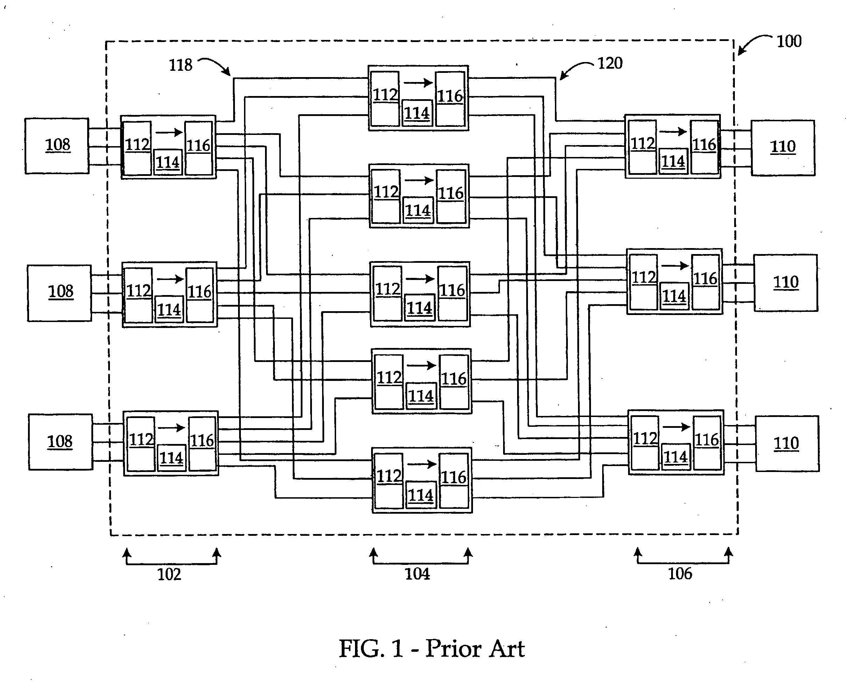

**FIG. 1** is a simplified view of a three-stage optical switch according to the prior art. Optical switch 100 is constructed according to the Clos architecture and includes a first stage 102, a second stage 104, and a third stage 106. An inlet transmission medium 108 inputs optical signals into the first stage 102 and an outlet transmission medium 110 receives optical signals from the third stage 106. In order to minimize both loss and jitter generated by optical switching components and electrical switching components, respectively, the two are combined in optical switch 100 to provide a Clos switch that uses both optical and electrical components.

Electrical components perform the switching operations in the **FIG. 1** embodiment. The entire multistage switch, however, typically cannot be implemented on a single circuit board. As a result, fiber optic cables are used to transmit optical signals between boards. The multistage optical switch 100 therefore propagates optical signals between stages and electrical signals within each stage, resulting in the need to perform electrical-to-optical conversion prior to transmitting a signal on a fiber optical cable and performing optical-to-electrical conversion before the optical signal is input into an electrical switching element.

The first stage 102 of optical switch 100 includes optical-to-electrical converters 112 that receive the optical signals and convert the signals to electrical signals. The electrical signals are then input into electrical switching element 114 for the necessary switching operations. Before the signals are transmitted to the second stage 104, the electrical signals are converted to optical signals by electrical-to-optical converters 116. The optical signals are then transmitted to the second stage 104 via fiber optic cables 118. The second and third stages 104, 106 operate in the same manner as the first stage 102, with optical-to-electrical converters 112, electrical switching elements 114, and electrical-to-optical converters 116. The optical signals are transmitted to the third stage 106 via fiber optic cables 120.

The multistage optical switch of **FIG. 1** can be a costly switch to implement because the optical-to-electrical converters 112, 120, 128 are typically implemented as photodiodes and electrical-to-optical converters 116, 124, 132 as lasers. Since each stage in a multistage switch requires one photodiode and one laser for each signal propagating through a stage, the cost of constructing large multistage optical switches can be significant.

### Summary:

In accordance with the invention, a multistage optical switch utilizing two different types of switching elements to propagate signals through the switch is provided. Embodiments in accordance with the invention include electrical switching elements in one or more stages and optical switching elements in one or more different stages. An optical-to-electrical converter is connected to each signal line input into an electrical switching element and an electrical-to-optical converter is connected to each signal line output of an electrical switching element. Fiber optic cables may be used to transmit signals between stages. A multistage optical switch having any desired number of stages can be constructed in accordance with the invention.

### Brief Description of the Drawings:

The invention will best be understood by reference to the following detailed description of embodiments in accordance with the invention when read in conjunction with the accompanying drawings, wherein:
**FIG. 1** is a simplified top view of a three-stage optical switch according to the prior art;
**FIG. 2** is a simplified top view of a three-stage optical switch in a first embodiment in accordance with the invention; and
**FIG. 3** is a simplified top view of a three-stage optical switch in a second embodiment in accordance with the invention.

### Detailed Description:

The invention relates to a multi-stage optical switch that utilizes one type of switching element in the first and last stages and another type of switching element in one or more intermediate stages. The following description is presented to enable one skilled in the art to make and use the invention, and is provided in the context of a patent application and its requirements. Various modifications to the disclosed embodiments will be readily apparent to those skilled in the art, and the generic principles herein may be applied to other embodiments. Thus, the invention is not intended to be limited to the embodiments shown, but is to be accorded the widest scope consistent with the appended claims and with the principles and features described herein.

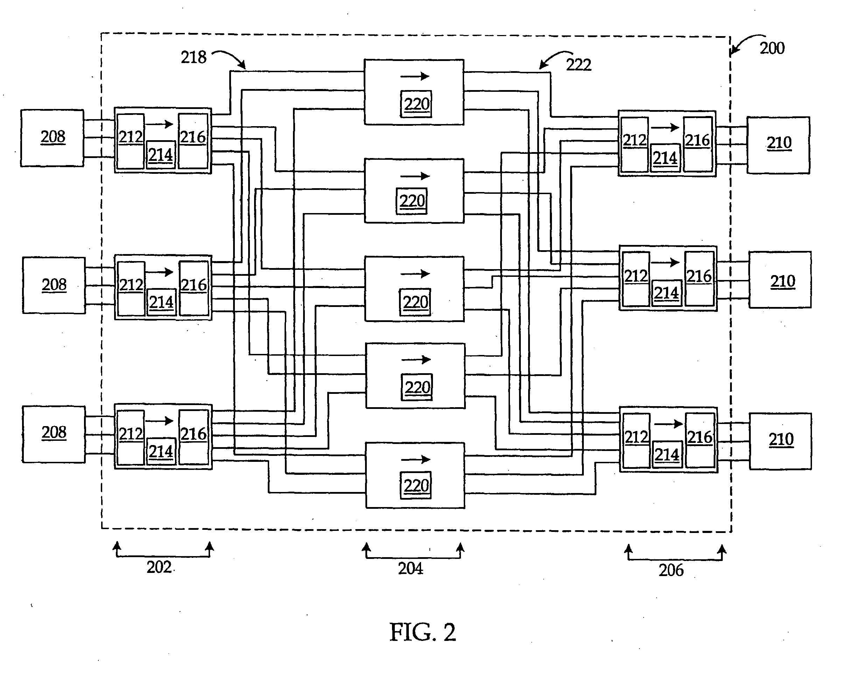

With reference now to the figures and in particular with reference to FIG. 2, there is shown a simplified top view of a first three-stage optical switch in accordance with the invention. Optical switch 200 includes, but is not limited to, a first stage 202, a second stage 204, and a third stage 206. An inlet transmission medium 208 inputs a plurality of optical signals into the first stage 202, and an outlet transmission medium 210 receives a plurality of optical signals from the third stage 206. Optical switch 200 utilizes the Clos architecture in this embodiment in accordance with the invention.

Optical-to-electrical converters 212, such as photodiodes, receive the optical signals from the inlet transmission medium 208 and convert the optical signals to electrical signals. The electrical signals are then input into electrical switching elements 214. Electrical switching elements 214 may be configured as any appropriate electrical switching devices, including microelectromechanical system (MEMS) switches, bubble switches, optomechanical, thermal, piezo-optical, and arrays of 1x2 switches.

After performing the desired switching operations, the electrical switching elements 214 transmit the electrical signals to electrical-to-optical converters 216. Electrical-to-optical converters 216 may comprise, for example, lasers in the FIG. 2 embodiment. The electrical signals are then converted to optical signals, and the optical signals are transmitted to the second stage 204 via fiber optic cables 218.

Optical switching elements 220 in the second stage 204 receive the optical signals and, after performing the desired switching operations, transmit the optical signals to the third stage via fiber optic cables 222. Optical switching elements 220 may be configured as any appropriate optical switching devices, including microelectromechanical system (MEMS) switches, bubble switches, optomechanical, thermal, piezo-optical, and arrays of 1x2 switches.

Optical-to-electrical converters 212 in the third stage 206 receive the optical signals and convert the optical signals to electrical signals. The electrical signals are then input into electrical switching elements 214. After performing the desired switching operations, the electrical switching elements 214 transmit the electrical signals to electrical-to-optical converters 216. The electrical signals are converted to optical signals and the optical signals are then output to outlet transmission medium 210.

Thus, multistage optical switch 200 utilizes electrical switching elements in the first and third stages and optical switching elements in the second stage. This configuration advantageously reduces the number of optical-to-electrical converters and electrical-to-optical converters used in a switch. As discussed in conjunction with **FIG. 1,** the prior art construction uses one optical-to-electrical converter and one electrical-to-optical converter for each signal in each stage. For a three-stage switch, this means six converters are used for each signal in the switch. Unlike the prior art construction, the **FIG. 2** embodiment in accordance with the invention utilizes four converters for each signal in the switch (two optical-to-electrical converters and two electrical-to-optical converters). Consequently, the complexity and cost to construct multistage switch 200 is less than conventional Clos-type optical switches.

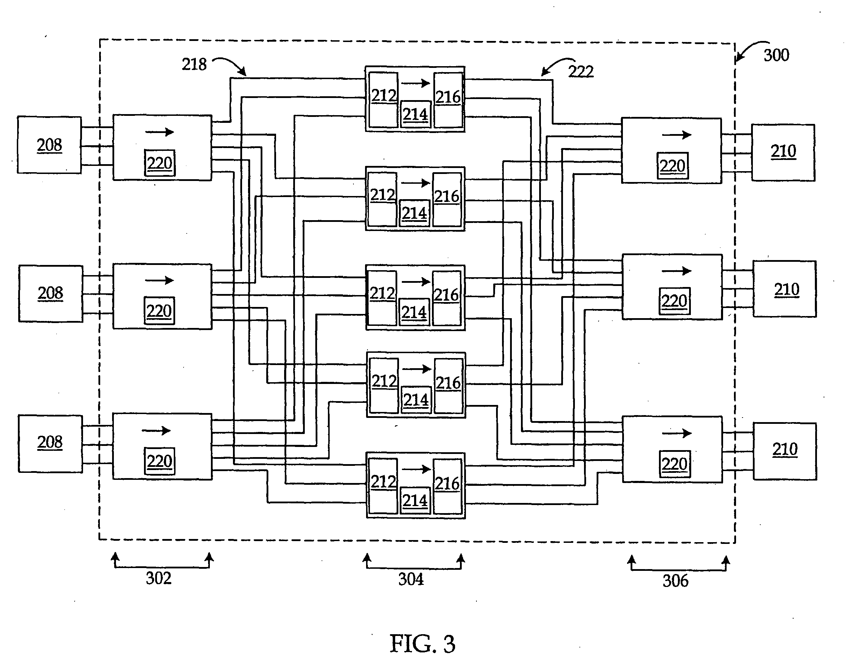

**FIG. 3** is a simplified top view of a second three-stage optical switch in accordance with the invention. Optical switch 300 includes, but is not limited to, a first stage 302, a second stage 304, and a third stage 306. An inlet transmission medium 208 inputs a plurality of optical signals into the first stage 302 and an outlet transmission medium 210 receives a plurality of optical signals from the third stage 306. In other embodiments in accordance with the invention, optical switch 300 may be implemented using various components and configurations in addition to, or instead of, those discussed in conjunction with the **FIG. 3** embodiment.

Optical switch 300 utilizes the Clos architecture in this embodiment in accordance with the invention. Optical switching elements 220 in the first stage 302 receive the optical signals from the inlet transmission medium 208. After performing the desired switching operations, the optical switching elements 220 transmit the optical signals to the second stage 304 via fiber optic cables 218.

Optical-to-electrical converters 212 receive the optical signals and convert the optical signals to electrical signals. The electrical signals are then input into electrical switching elements 214, which perform the desired switching operations. The electrical signals are input into electrical-to-optical converters 216 and converted to optical signals. The optical signals are transmitted to the third stage via fiber optic cables 222. Optical switching elements 220 in the third stage 306 receive the optical signals and, after performing the desired switching operations, transmit the optical signals to outlet transmission medium 210.

Thus, optical switch 300 utilizes optical switching elements in the first and third stages and electrical switching elements in the second stage. This configuration further reduces the number of optical-to-electrical converters and electrical-to-optical converters used in a switch. The **FIG. 3** optical switch 300 utilizes two converters for each signal in the switch (a single optical-to-electrical converter and a single electrical-to-optical converter). Consequently, the complexity and cost to construct optical switch 300 is less than conventional Clos-type optical switch architectures.

Embodiments in accordance with the invention, however, are not limited in application to a three-stage optical switch. Using conventional recursion techniques, a single stage switch can be replaced with a multistage switch, such as a three-stage or a five-stage switch. For example, an eleven-stage switch may be constructed by removing the second, third, and fourth stages of a five-stage switch and replacing them with three-stage switches. Thus, a multistage optical constructed in accordance with the invention can include any desired number of stages.

Those skilled in the art will appreciate that several factors can influence the usage order of the different types of switching elements in a multistage switch in accordance with the invention. For example, if an optical signal requires amplification before the signal is transmitted to a subsequent stage, a designer may want to utilize electrical switching elements in conjunction with an amplifier in that stage. Alternatively, if optical switching elements are less expensive than electrical switching elements, a designer may want to utilize a multistage switch construction that uses optical switching elements in the majority of stages, thereby resulting in a less expensive switch. The type of application of a multistage optical switch can also influence the usage order for the different types of switching elements.

## Claims

1. A multistage optical switch (200) comprised of a combination of electrical switching elements (214) and optical switching elements (220), wherein at least one stage (202) in the multistage optical switch (200) includes electrical switching elements (214) and at least one different stage (204) in the multistage optical switch (200) includes optical switching elements (220).

2. The multistage optical switch (200) of claim 1, further comprising:
a plurality of optical-to-electrical converters (212) each connected electronically to a corresponding signal line input into each of the electrical switching elements (214); and
a plurality of electrical-to-optical converters (216) each connected electronically to a corresponding signal line output from each of the electrical switching elements (214).

3. The multistage optical switch (200) of claim 1 or 2, wherein a plurality of fiber optic cables (218) transmit signals between stages in the multistage optical switch (200).

4. A method for constructing a multistage optical switch (200), comprising the steps of:
providing a plurality of a first type of switching elements for switching a plurality of a first type of signal in a first stage of the multistage optical switch (200);
providing a plurality of the first type of switching elements for switching the plurality of the first type of signal in a last stage of the multistage optical switch (200); and
providing a plurality of a second type of switching elements for switching a plurality of a second type of signal in one or more intermediate stages positioned between the first and last stages of the multistage optical switch (200).

5. The method of claim 4, wherein the plurality of a first type of signal comprises a plurality of electrical signals and the plurality of a second type of signal comprises a plurality of optical signals.

6. The method of claim 5, wherein the plurality of a first type of switching elements comprises a plurality of electrical switching elements (214) and the plurality of a second type of switching elements comprises a plurality of optical switching elements (220).

7. The method of claim 6, further comprising:
providing a plurality of optical-to-electrical converters (212) each connected electronically to a corresponding signal line input into each of the electrical switching elements (214); and
providing a plurality of electrical-to-optical converters (216) each connected electronically to a corresponding signal line output from each of the electrical switching elements (214).

8. The method of claim 4, wherein the plurality of a first type of signal comprises a plurality of optical signals and wherein the plurality of a second type of signal comprises a plurality of electrical signals.

9. The method of claim 8, wherein the first type of switching elements comprises optical switching elements (220) and the second type of switching elements comprises electrical switching elements (214).

10. The method of claim 9, further comprising:
providing a plurality of optical-to-electrical converters (212) each connected electronically to a corresponding signal line input into each of the electrical switching elements (214); and
providing a plurality of electrical-to-optical converters (216) each connected electronically to a corresponding signal line output from each of the electrical switching elements (214).
